(19) Europäisches Patentamt
European Patent Office
Office européen des brevets

(11) **EP 3 408 126 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
**B60K 37/06** (2006.01)     **G06F 3/01** (2006.01)
**H01H 13/50** (2006.01)     **G05G 5/03** (2008.04)

(21) Anmeldenummer: **17701851.2**

(86) Internationale Anmeldenummer:
**PCT/EP2017/051416**

(22) Anmeldetag: **24.01.2017**

(87) Internationale Veröffentlichungsnummer:
**WO 2017/129557 (03.08.2017 Gazette 2017/31)**

(54) **BEDIENEINHEIT FÜR EIN FAHRZEUG**

OPERATING UNIT FOR A VEHICLE

UNITÉ DE COMMANDE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2016 DE 102016101556**

(43) Veröffentlichungstag der Anmeldung:
**05.12.2018 Patentblatt 2018/49**

(73) Patentinhaber: **Behr-Hella Thermocontrol GmbH 70469 Stuttgart (DE)**

(72) Erfinder:
• **VOGT, Frank**
  **33165 Lichtenau-Husen (DE)**
• **BESCHNITT, Alexander**
  **32052 Herford (DE)**
• **KARLICZEK, Markus**
  **59192 Bergkamen (DE)**
• **TREUGUTH, Udo**
  **59597 Bad Westernkotten (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
DE-A1-102009 007 243     DE-A1-102013 006 414
DE-B3-102012 221 107

**Beschreibung**

Die Erfindung betrifft eine Bedieneinheit für ein Fahrzeug, bei der es sich beispielsweise um ein Infotainment-System zur Steuerung diverser Fahrzeugkomponenten handeln kann.

Bedieneinheiten mit Display-Bedienelementen, auf denen beispielsweise menügesteuert verschiedene Symbolfelder darstellbar sind, über die Funktionen für eine Fahrzeugkomponente ausgewählt werden können, erfreuen sich zunehmender Beliebtheit. Dabei soll dem Bediener die Auswahl einer Funktion taktil bestätigt werden, was beispielsweise durch eine zusätzliche aktive Bewegung des Bedienelements nach dessen Betätigung erfolgt, wobei die Betätigung mit einer insbesondere kaum wahrnehmbaren Bewegung des Bedienelements einhergeht. Dieses haptische Feedback soll, über die gesamte Bedienoberfläche des Bedienelements betrachtet, möglichst homogen sein. Das zuvor genannte Konzept ist auch unter Force Sense Force Feedback bekannt. Die Konstruktion der Bedieneinheit erfordert die elastische Lagerung des Bedienelements gegebenenfalls längs zweier unterschiedlicher Achsen, was aufwendig sein kann, und zwar insbesondere dann, wenn das Bedienelement z.B. aufgrund seiner Größe und der Anzahl seiner Bestandteile ein relativ großes Eigengewicht aufweist. Die federelastische Lagerung muss einerseits steif genug sein, um ein Vibrieren des Bedienelements aufgrund von Fahrzeugbewegungen beim Fahren zu verhindern; andererseits sollte die elastische Lagerung für die taktile Rückmeldung "weich" genug sein, damit der Energieaufwand für die mechanische Anregung des Bedienelements nicht zu hoch ist.

Bedieneinheiten mit haptischem Feedback einer Berührung eines Tastenbereichs durch Lateralbewegungsanregung desselben sind aus DE-A-10 2009 007 243, DE-B-10 2012 221 107 und DE-A-10 2013 006 414 bekannt.

Aus der nachveröffentlichten EP-A-3 043 240 (entspricht DE-A-10 2015 200 037) ist eine Bedienvorrichtung für ein Kraftfahrzeug mit einem Gehäuse bekannt, an dessen Vorderseite ein Touchscreen als Bedienelement mit einer Bedienoberfläche angeordnet ist. Der Touchscreen ist in Vertikalrichtung und in Lateralrichtung rückstellfähig beweglich. Ein Aktor bewirkt eine Betätigungsrückmeldebewegung des Bedienelements in Lateralrichtung, wobei seine elektromechanische Ausführung ein elektromagnetisch ansteuerbares Antriebselement aufweist, das mit dem Touchscreen gekoppelt ist. Eine Haptik-Steuereinrichtung bildet eine Auswerte- und Ansteuereinheit unter Einbeziehung von Sensorelementen, welche bei Auslenkung der Bedienoberfläche des Touchscreen in vertikaler Richtung ein Signal auslösen. Die elastische Laterallagerung des in Touchscreen erfolgt mittels Blattfedern.

Aufgabe der Erfindung ist es, eine Bedieneinheit für Fahrzeug zu schaffen, die mit mindestens einem Bedienelement mit Bedienoberfläche versehen ist, welches eine konstruktions- sowie montagefreundliche elastische Lagerung aufweist.

Zur Lösung dieser Aufgabe wird mit der Erfindung eine Bedieneinheit für ein Fahrzeug vorgeschlagen, wobei die Bedieneinheit versehen ist mit

- einem Gehäuse mit einer Vorderseite,
- einem an der Vorderseite des Gehäuses angeordneten Bedienelement, das eine Bedienoberfläche aufweist,
- wobei das Bedienelement an und/oder in dem Gehäuse längs einer zur Bedienoberfläche im Wesentlichen orthogonal verlaufenden Vertikalbewegungsachse und längs einer im Wesentlichen quer zu dieser verlaufenden Lateralbewegungsachse federelastisch gelagert ist,
- mindestens einem Sensor zur Erfassung einer Betätigungsbewegung des Bedienelements in Richtung der Vertikalbewegungsachse,
- einem in und/oder an dem Gehäuse angeordneten Aktuator zur Rückmeldebewegung des Bedienelements zumindest auch in der Lateralbewegungsachse bei einer erkannten Betätigungsbewegung des Bedienelements, wobei der Aktuator ein elektromagnetisch ansteuerbares, mit dem Bedienelement mechanisch gekoppeltes Antriebselement aufweist, das vor- und/oder zurückbewegbar ist,
- einer Auswerte- und Ansteuereinheit, die mit dem Sensor und dem Aktuator verbunden ist, und
- einem Federrahmen zur federelastischen Lagerung des Bedienelements,
- wobei der Federrahmen zwei quer zur Lateralbewegungsachse verlaufende Querrahmenabschnitte aufweist, in denen jeweils mindestens ein Blattfederarm ausgebildet ist,
- wobei jeder Blattfederarm ein mit dem Federrahmen verbundenes erstes Ende und ein freies zweites Ende aufweist,
- wobei sich jeder Blattfederarm in einer Vertikalebene erstreckt und die Lateralbewegungsachse quer zu dieser Vertikalebene verläuft,
- wobei jeder Blattfederarm auch in der Vertikalebene federelastisch ist und
- wobei das Bedienelement außerhalb der Blattfederarme des Federrahmens an diesem fixiert ist und die freien zweiten Enden der Blattfederarme des Federrahmens an dem Gehäuse befestigt sind.

Nach der Erfindung wird das aktive haptische Feedback einer Betätigung des Bedienelements durch eine laterale Auslenkung des Bedienelements realisiert. Zur Betätigung wird das Bedienelement in einer im Wesentlichen orthogonal zur Bedienoberfläche verlaufenden Vertikalbewegungsachse bewegt. Wird dann über einen Sensor diese Betätigungsbewegung erfasst, erfolgt eine aktive Bewegung des Bedienelements, die eine Lateralbewegungskomponente, d.h. verallgemeinert eine quer zur Vertikalbewegungsachse gerichtete Bewegungskomponente (beispielsweise nach links oder rechts, nach oben oder nach unten) aufweist. Die Force-Feedback-Bewegung kann aber auch rein lateral sein. Hierzu sieht die Erfindung als Konstruktionselement einen Federrahmen zur federelastischen Lagerung des Bedienelements am Gehäuse vor. Der Federrahmen übernimmt die elastische Anbindung des Bedienelements in sowohl vertikaler als auch lateraler Richtung. Hierzu ist erfindungsgemäß vorgesehen, dass der Federrahmen zwei Querrahmenabschnitte aufweist, die quer zur Lateralbewegungsachse verlaufen. In jedem dieser Querrahmenabschnitte befindet sich ein Blattfederarm, der ein mit dem Federrahmen verbundenes erstes Ende und ein freies zweites Ende aufweist. Jeder Blattfederarm erstreckt sich in einer Vertikalebene, zu der die Lateralbewegungsachse quer verläuft. Sowohl innerhalb der Vertikalebene, also in Richtung der Vertikalbewegungsachse, als auch in Richtung der Lateralbewegungsachse ist jeder Blattfederarm federelastisch. Grundsätzlich gilt, dass auf Grund der Anregung des Bedienelements für die haptische Rückmeldung die resultierende Bewegung des Bedienelements in einer lateralen Hauptbewegung und einer zu Bedienoberfläche normalen Nebenbewegung erfolgt. Je nach Anstellwinkel der Anregung kann die Normalbewegungskomponente in ihrer Größe variieren. Es findet also keine reine Lateralbewegung statt.

Jeder Blattfederarm ist zweckmäßigerweise als bis auf sein mit dem Federrahmen einteilig verbundenes erstes Ende freigeschnittener Bereich des betreffenden Querrahmenabschnitts des Federrahmens ausgebildet. Jeder Blattfederarm ist also nach Art eines einseitig eingespannten Biegebalkens ausgebildet, der in Richtung der Erstreckung der Vertikalbewegungsachse steifer ausgebildet sein kann als quer dazu, also als in Richtung der Erstreckung der Lateralbewegungsachse. Ebenso können die beiden Steifigkeiten gleich ausgelegt werden, und zwar in Abhängigkeit von den jeweiligen Anforderungen an die Haptik der Bedienung des Bedienelements. Die steife Anbindung des Bedienelements in Vertikalbewegungsrichtung bewirkt, dass die Niederdrückbewegung des Bedienelements bei dessen Betätigung vom Bediener kaum wahrgenommen wird, was haptisch vorteilhaft ist. Die taktile Rückmeldung ist nicht allein von der Feder abhängig, sondern von der Systemantwort der bewegten Masse, d.h. von der Bewegung und dem Weg an dem Betätigungspunkt auf der Bedienoberfläche über der Zeit. Die Systemantwort ist wiederum abhängig von der Energie, die in das System eingeprägt wird und von der Signalform (Ansteuerung), mit der sie eingeprägt wird. Zusätzliche Steifigkeiten des Systems wirken sich ebenfalls aus. So können beispielsweise Vorgabekurben der Systemantwort unabhängig von Feder und Masse vorgegeben sein.

Eine "weiche" Anbindung bei großer Masse bedeutet, dass nur wenig Energie zur Bewegung der Masse aufgebracht werden muss, jedoch mehr Energie aufgebracht werden muss, um die große Masse wieder in ihre Ausgangsposition zurückzubewegen (zusätzlich entstehen Schwingungs- bzw. Vibrationsprobleme). Eine "harte" Feder bzw. Anbindung bedeutet, dass viel Energie zum Anregen der Masse aufgebracht werden muss, jedoch nur wenig Energie erforderlich ist, um die Masse wieder in ihre Ausgangsposition "zurückzuholen". Die höhere Federkraft unterstützt diese Zurückbewegung, wobei vorteilhafterweise die Schwingungsprobleme geringer sind. Grundsätzlich kann sich ein System mit harter und weicher Feder je nach Ansteuerung haptisch im Wesentlichen gleich verhalten.

Die beiden in unterschiedlichen Richtungen wirkenden elastischen Lagerungen des Bedienelements werden erfindungsgemäß durch ein einziges Bauteil, nämlich den vorzugsweise aus Metall gefertigten Federrahmen realisiert. Dies ist hinsichtlich der Herstellungskosten und der Montage von Vorteil. Ein weiterer Grund für die Verwendung von Metall für den Federarm ist in der Steifigkeit zu sehen. Der Aktuator wirkt auf den Rahmen ein. Je weicher der Rahmen ist, desto mehr Relativbiegung und desto weniger Weg an dem Betätigungspunkt sind gegeben. Außerdem wirkt sich steiferes Federrahmenmaterial vorteilhaft auf die einzuhaltenden Toleranzen aus.

In vorteilhafter Ausgestaltung der Erfindung kann ferner vorgesehen sein, dass jeder Blattfederarm zur Bildung von mindestens zwei Blattfederstegen mindestens eine umlaufend geschlossene Aussparung aufweist. Jeder Blattfederarm ist somit nach Art eines Parallelogramms ausgeführt, wobei sich in den Ecken des Parallelogramms keine Gelenke befinden, sondern die beiden Blattfederstege an den beiden Enden des betreffenden Blattfederarms starr miteinander gekoppelt sind. Diese Ausgestaltung bringt weiterhin den Vorteil einer Parallelkinematik mit sich, die die Homogenität bei in Normalrichtung erfolgender Betätigung deutlich verbessert. Der Vorteil zeigt sind insbesondere dann, wenn auf die Bedienoberfläche in deren Eckenbereichen eingewirkt wird. Die Kinematik verringert das Verkippen des betätigten Bedienelements. Dies wirkt sich positiv auf das haptische Empfinden und die Wertigkeit des Geräts aus, und zwar unter anderem auch dadurch, dass der Fugenverlauf zu das Bedienelement umgebenden starrstehenden Bauteilen nur wenig optische Beeinträchtigungen erfährt.

Gemäß einer konstruktiv vereinfachten Ausführungsform ist der Federrahmen rechteckig, wobei er zwei parallel zur Lateralbewegungsachse des Bedienelements verlaufende Längsrahmenabschnitte sowie zwei quer zur Lateralbewegungsachse verlaufende Querrahmenabschnitte aufweist, an und/oder in denen jeweils mindestens ein Blattfederarm ausgebildet ist. Auch nichtrechteckige Federahmen können eingesetzt werden, wie z.B. Freiformdisplays mit Force Feedback, welche dann einen umlaufend nicht rechteckigen Federrahmen aufweisen. Das Bedienoberfläche bildende Coverglas könnte eine x-beliebige Kontur besitzen (gekrümmt und geboten in mehreren Richtungen). Der Federrahmen wäre dann nicht mehr einfach nur rechteckig.

Wegen der Lateralverschiebbarkeit des mindestens einen Bedienelements muss dieses gegenüber dem Gehäuse und der angrenzenden Konstruktion, an dem das Gehäuse befestigt ist, ein Spiel aufweisen. In Lateralbewegungsrichtung existieren also seitlich des Bedienelements Spalte. Es ist zweckmäßig, derartige Spalte auch an den anderen Randabschnitten des Bedienelements vorzusehen. Auch sollte darauf geachtet werden, dass das Bedienelement beispielsweise bündig mit der Oberfläche der Konstruktion, an der das Gehäuse angebracht ist, verläuft.

Vorteilhaft ist es insoweit, wenn die Befestigung des Federrahmens am Gehäuse bzw. die Befestigung des Bedienelements am Federrahmen unter Ausgleich von Montagetoleranzen möglich ist. Hierzu kann mit Vorteil vorgesehen sein, dass das freie Ende jedes Blattfederarms und/oder das Gehäuse mindestens eine Aufnahmeöffnung für ein sich durch die Aufnahmeöffnung erstreckendes Befestigungselement zur Befestigung des betreffenden Blattfederarms an dem Gehäuse aufweist, wobei sich das Befestigungselement zwecks Ausgleich von Montagetoleranzen mit Spiel durch die Aufnahmeöffnung erstreckt. Bei dem Befestigungselement zur Befestigung eines Blattfederarms am Gehäuse bzw. am Bedienelement handelt es sich zweckmäßigerweise um eine Schraube oder einen Niet, wobei das Befestigungselement mit Spiel in einer Aufnahmeöffnung des freien Endes des betreffenden Blattfederarms sitzt. Dieses Spiel kann ausgenutzt werden, um den Federrahmen erst nach einer Justage mit dem Gehäuse bzw. dem Bedienelement starr zu verbinden. Auf diese Weise ist also eine Höhenjustage des Bedienelements sowie eine Seitenjustage an den Längsrahmenabschnitten des Federrahmens möglich. An den Querrahmenabschnitten des Federrahmens erfolgt eine lateralseitige Selbstzentrierung des Bedienelements relativ zum Gehäuse, und zwar aufgrund der Blattfederarme. Damit kann also das Spaltmaß um das Bedienelement herum genau und gleichmäßig eingestellt werden, und zwar bei der Montage und vor der Fixierung des Federrahmens am Gehäuse bzw. am Bedienelement. Insoweit zweckmäßig ist es, wenn die beiden Blattfederarme zueinander gegensinnig ausgerichtet sind, die ersten und zweiten Enden der Blattfederarme also jeweils wechselweise auf unterschiedlichen Seiten der in Lateralbewegungsachsenrichtung verlaufenden Längsmittelachse des Bedienelements angeordnet sind. Dies führt hinsichtlich der lateralseitigen Selbstzentrierung des Bedienelements zu weiteren Vorteilen.

Gemäß einem weiteren Aspekt der Erfindung ist es deren Aufgabe, die aktive taktile Rückmeldung für das haptische Feedback dergestalt auf das Bedienelement einwirken zu lassen, dass das haptische Rückmeldeempfinden unabhängig vom Ort, an dem die Bedienoberfläche berührt und betätigt wird, im Wesentlichen gleich ist.

Hierzu ist gemäß einer Weiterbildung der Erfindung vorgesehen, dass der Massenschwerpunkt des Bedienelements auf der Wirkbewegungsachse des Antriebselements des Aktuators liegt. E ist aber auch denkbar, dass die Wirkachse nahe an dem Massenschwerpunkt vorbei verläuft.

Wie bereits oben erwähnt, wird das aktive haptische Feedback einer Betätigung des Bedienelements durch eine Auslenkung des Bedienelements mit Lateralbewegungskomponente realisiert.

Dabei ist darauf zu achten, dass das Bedienelement bei seiner lateralen Auslenkung nicht verkippt, was aber ohne besondere Maßnahmen dann nahezu ausgeschlossen ist, wenn, wie es der Normalfall ist, der Aktuator nicht im Massenschwerpunkt des Bedienelements mit diesem verbunden ist. Das Bedienelement umfasst im Wesentlichen ein Display mit entsprechender Anzeigetechnik und -technologie (beispielsweise LCD-Display) und Hinterleuchtung, so dass es eine nicht unbeträchtliche Bautiefe aufweisen kann. Da der Aktuator im Idealfall allenfalls direkt unterhalb dieses Bedienelements angeordnet sein kann, greift sein Antriebselement zur aktiven Haptik-Rückmeldebewegung in Lateralbewegungsrichtung außerhalb des Massenschwerpunkts des Bedienelements an diesen an. Hierdurch kommt es dann ohne entsprechende Maßnahmen zwangsweise zu einer unerwünschten Verkippung des Bedienelements auf Grund der Momentenwirkungen, die durch die Kraft des Aktuators und den geometrischen Hebel in Bezug auf den Masseschwerpunkt hervorgerufen werden. Auf Grund der Verkippung würde sich das Bedienelement für den Bediener an jedem Ort seiner Bedienoberfläche anders "anfühlen". Bekannte Lösungen zielen auf eine Zwangsführung mit entsprechender Auslegung des Federsystems ab, mit dem das Bedienelement am Gehäuse der Bedieneinheit gelagert ist, oder auf eine parametrisierte Ansteuerung des Aktuators in Abhängigkeit von dem Ort der Betätigung des Bedienelements durch den Bediener. All dies ist mechanisch und ansteuerungstechnisch aufwendig.

Daher sieht die Erfindung gemäß einer Variante vor, den Aktuator mechanisch derart ausgerichtet anzuordnen, dass die Wirkbewegungsachse des Antriebselements den Massenschwerpunkt des Bedienelements schneidet. Auf der Verlängerung der Wirkbewegungsachse des Antriebselements liegt also der Massenschwerpunkt des Bedienelements. Die Wirkbewegungsachse des Antriebselements verläuft dabei also in einem spitzen Winkel zur beabsichtigten Lateralbewegungsrichtung für das aktive haptische Feedback. Indem das Bedienelement also längs der Wirkbewegungsachse des Antriebselements bewegt wird, weist die Feedbackbewegung des Bedienelements neben der beabsichtigten Lateralbewegungskomponente auch eine Vertikalbewegungskomponente auf, was aber nicht weiter störend ist. Vielmehr entscheidend ist, dass die Bedienoberfläche des Bedienelements beim aktiven haptischen Feedback ihre Ausrichtung im Raum beibehält, also eine schräg gerichtete Parallelverschiebung erfährt.

Durch diese Maßnahme ist es möglich, die aktive haptische Feedback-Bewegung rein translatorisch auszuführen; denn die Wirkrichtung des Antriebselements verläuft durch den Massenschwerpunkt des Bedienelements.

Rotatorische Bewegungsanteile beim aktiven haptischen Feedback des Bedienelements werden weiter reduziert, indem die Blattfederarme, mit deren Hilfe das Bedienelement nach einem aktiven haptischen Feedback wieder in die Ausgangsposition zurück bewegt werden, in einer zur Bedienoberfläche parallelen, gemeinsamen Ebene mit dem Massenschwerpunkt des Bedienelements liegen. Wäre dies nicht der Fall, so würde das Muster der aktiven haptischen Feedbackbewegung des Bedienelements rotatorische Anteile aufweisen.

Ferner ist es vorteilhaft, die Haptik aktiv in Hin- und Rückweg zu steuern oder zu regeln. Hierfür ist es mitentscheidend, dass die Bewegung des Bedienelements möglichst rein translatorisch ist, was durch diese erfindungsgemäße Variante realisierbar ist. Ferner lässt sich hierdurch im Wesentlichen sicherstellen, dass das haptische Empfinden unabhängig vom Betätigungsort auf der Bedienoberfläche immer gleich ist. Aufwendige konstruktive Lösungen zur federnden Lagerung des Bedienelements dergestalt, dass dieses eine reine translatorische Bewegung ausführt, sind demnach nicht mehr erforderlich.

Zweckmäßig ist es, wenn die Lateralbewegungsachse des Bedienelements und die Wirkbewegungsachse des Antriebselements des Aktuators eine gemeinsame, im Wesentlichen orthogonal zur Bedienoberfläche stehende Vertikalebene aufspannen.

In weiterer Ausgestaltung der Erfindung kann vorgesehen sein, dass das Gehäuse unterhalb des Bedienelements einen Bauraum aufweist und dass der Aktuator zur Erzielung eines kleinstmöglichen Winkels zwischen der Wirkbewegungsachse des Antriebselements des Aktuators und der Lateralbewegungsachse des Bedienelements so nah wie bauraumbedingt möglich unterhalb des Bedienelements und/oder soweit wie bauraumbedingt möglichst weit von dem Massenschwerpunkt des Bedienelements entfernt angeordnet ist. Je kleiner der Winkel zwischen der Wirkbewegungsachse des Aktuators und der Lateralbewegungsachse des Bedienelements ist, desto größer ist der Lateralbewegungsanteil des Bedienelements in Relation zum Lateralbewegungsanteil bei der Feedback-Bewegung.

Bei einer weiteren Ausgestaltung der Erfindung liegen die zur Realisierung der Lateralbewegung des Bedienelements vorgesehenen Federwirkachsen der Blattfederarme auf der Lateralbewegungsachse oder in einer Ebene, die im Wesentlichen orthogonal zur von der Wirkbewegungsachse des Antriebselements des Aktuators und der Lateralbewegungsachse des Bedienelements aufgespannten Ebene ist.

Ferner kann vorgesehen sein, dass der Aktuator als Zuganker-Elektromagnet mit einem ersten Stator, der eine erste Erregerspule aufweist, und mit einem Anker als Antriebselement ausgebildet ist, dass der Anker mit einer Messspule versehen ist, an der eine Messspannung anliegt, wenn der Anker von einem durch die erste Erregerspule erzeugten Magnetfluss durchdrungen wird, und dass die erste Erregerspule und die Messspule mit der Auswerte- und Ansteuereinheit verbunden sind, wobei mittels der Auswerte- und Ansteuereinheit die Kraft steuerbar und/oder regelbar ist, mit der das Antriebselement des Aktuator in Richtung auf den ersten Stator zu bewegbar ist und/oder die Auslenkbewegung des Antriebselements aus dessen Ruheposition sowie die Zurückbewegung des Antriebselements in dessen Ruheposition steuerbar und/oder regelbar ist.

Bei dieser Weiterbildung der Erfindung wird vorteilhafterweise eine relativ genaue und kostengünstige Kraftmessung in einem als Elektromagneten ausgeführten Aktuator für das haptische Feedback von Bedienelementen ermöglicht.

Dabei kann der Elektromagnet als Einfach-Zuganker oder als Doppel-Zuganker ausgeführt sein.

Aus Bauraum- und Kostengründen wird für das haptische Feedback oftmals ein Elektromagnet (Zugankermagnet) ohne Permanentmagnete als Aktuator eingesetzt. Der Stator eines derartigen Zugankermagnets ist also elektromagnetisch zu betreiben. Um die gewünschte Bewegung der Bedienoberfläche des Bedienelements einstellen zu können, muss der zeitliche Kraftverlauf am Aktuator genau einstellbar sein. Desweiteren kann es erforderlich sein, dass die Kraft, mit der das Bedienelement vor- und zurückbewegt wird, jeweils aktiv aufgebaut wird. Dies kann mittels eines Doppel-Zugankermagnets mit einem gemeinsamen Zuganker zwischen zwei elektromagnetischen Statoren realisiert werden.

Die Kraft eines Elektromagneten hängt bei langsam veränderlichen Magnetfeldern im Wesentlichen vom Ankerstrom und vom Luftspalt zwischen Zuganker und Stator ab. Der Kraftverlauf im Falle des haptischen Feedbacks ist jedoch sehr dynamisch und umfasst Frequenzanteile oberhalb von 1 kHz. Hierbei ist der Zusammenhang zwischen Strom und Kraft bei üblich verwendeten Automatenstählen oder Elektroblechen zur Magnetflussführung nicht trivial und nur durch eine sehr aufwendige Modellierung beschreibbar. Hinzu kommt noch, dass der Luftspalt wegen der mechanischen Toleranzen und der Bewegung der Bedienoberfläche nicht genau bekannt ist, weshalb die Kraftwirkung eines Zugankermagnets nur grob abschätzbar ist.

Mit dem hier beschriebenen Ansatz der Messung des den Zuganker durchziehenden Magnetflusses mittels einer Messspule und der an dieser abfallenden induzierten Spannung lässt sich nun die Kraft und die Bewegung des Zugankers steuern bzw. regeln. Auch lässt sich nun die Bewegung des Zugankers gezielt dämpfen, so dass ein Überschwingen in der jeweiligen Endlage der Vorund Zurückbewegung des Zugankers vermieden werden kann.

Wie bereits oben dargelegt, ist es von weiterem Vorteil, wenn der Zuganker zwischen zwei elektromagnetisch betriebenen Statoren angeordnet ist. Bei dieser Ausführungsform der Erfindung weist der Zuganker also einen zweiten Stator mit einer zweiten Erregerspule auf, wobei die beiden Statoren beidseitig des Ankers angeordnet sind und auch die zweite Erregerspule mit der Auswerte- und Ansteuereinheit verbunden ist, wobei mittels der Auswerte- und Ansteuereinheit die jeweilige Kraft, mit der das Antriebselement in die jeweilige Richtung auf den ersten bzw. zweiten Stator zu bewegbar ist, und/oder die Auslenkbewegung des Antriebselements aus dessen Ruheposition sowie die Zurückbewegung des Antriebselements in dessen Ruheposition steuerbar und/oder regelbar ist.

Die Erfindung wird nachfolgend anhand eines Ausführungsbeispiels und unter Bezugnahme auf die Zeichnung näher erläutert. Im Einzelnen zeigen:

Fig. 1     schematisch und in Seitenansicht eine Bedieneinheit für eine Fahrzeugkomponente mit als Displayelement ausgeführtem Bedienelement und federelastischer Lagerung sowie aktivem haptischen Feedback zur Betätigung des Bedienelements,

Fig. 2     eine Explosionsdarstellung zur Verdeutlichung der Verbindung des Bedienelements mit dem Gehäuse mittels eines Federrahmens, der sowohl die vertikale als auch die laterale elastische Anbindung des Bedienelements realisiert,

Fig. 3     eine Draufsicht auf die Bedieneinheit zur Verdeutlichung der Spaltmaßeinhaltung bei der Montage der Bedieneinheit,

Fig. 4     eine vergrößerte Darstellung des in Fig. 3 bei IV gekennzeichneten Bereichs,

Fig. 5     eine nochmals vergrößerte Darstellung des Bereichs IV der Fig. 3 zur Verdeutlichung des Toleranzausgleichs bei der Fixierung des Federrahmens am Gehäuse,

Fig. 6     eine Darstellung eines Elektromagneten, ausgebildet als Zugankermagnet mit Stator und Anker zur grundsätzlichen Erläuterung der elektromagnetisch relevanten Eigenschaften eines derartigen Elektromagneten,

Fig. 7     eine perspektivische Darstellung des als Doppelelektromagnet ausgebildeten Aktuators für die aktive haptische Rückmeldung und

Fig. 8     eine mögliche Beschaltung des Elektromagneten gemäß Fig. 7.

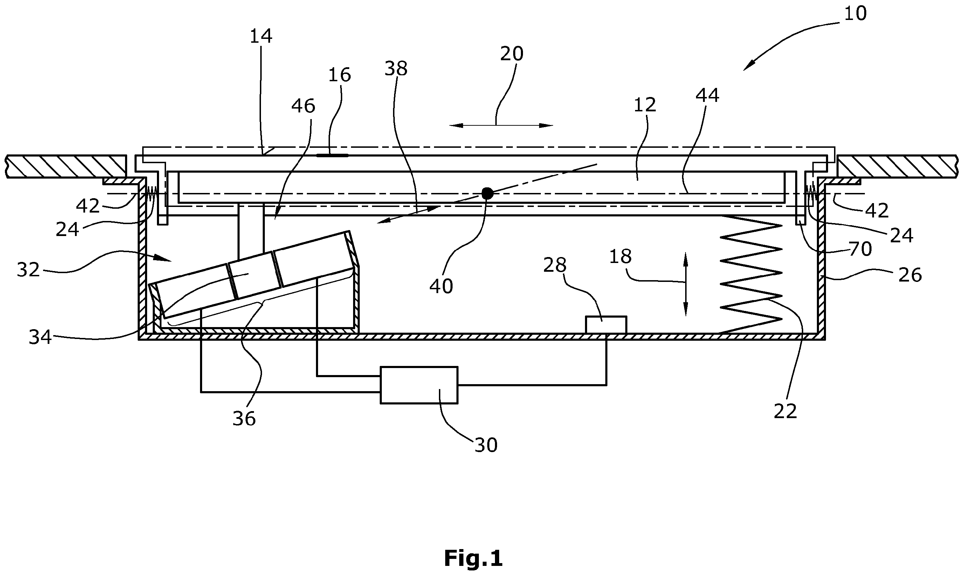

In Fig. 1 ist in Seitenansicht und schematisch eine Bedieneinheit 10 gezeigt, die ein Bedienelement 12 aufweist. Das Bedienelement 12 ist in diesem Ausführungsbeispiel als Display-Baugruppe mit einer Bedienoberfläche 14 ausgeführt, auf der eine Vielzahl von Symbolfeldern 16 darstellbar ist. Das Bedienelement 12 ist im Regelfall hinterleuchtet.

Zur Ausführung einer Betätigungsbewegung in Vertikalbewegungsrichtung (siehe den Doppelpfeil 18) sowie zur Bestätigung einer derartigen Betätigungsbewegung in lateraler Richtung (siehe den Doppelpfeil 20 in Fig. 1) ist das Bedienelement 12 über in Fig. 1 schematisch angedeutete erste und zweite Federn 22,24 elastisch an einem Gehäuse 26 gelagert, auf die später noch im Detail eingegangen wird. Mittels eines Sensors 28 lässt sich feststellen, dass sich das Bedienelement 12 längs der Vertikalbewegungsachse 18 bewegt hat. Dies wird in einer Auswerte- und Ansteuereinheit 30 ermittelt, woraufhin diese einen als Elektromagneten ausgeführten Aktuator 32 ansteuert, der ein Antriebselement 34 aufweist. Der feststehende Statorteil 36 des Aktuators 32 stützt sich am Gehäuse 26 ab, während das Antriebselement 34 des Aktuators 32 mechanisch mit dem Bedienelement 12 gekoppelt ist (oder umgekehrt). Die Wirkbewegungsachse des Antriebselements 34 ist anhand des Doppelpfeils 38 dargestellt.

Je größer und aufwendiger das Bedienelement 12 konstruiert ist, umso schwerer ist es und umso mehr Bauraum nimmt es ein. Wenn nun gefordert wird, dass das haptische Feedback über die gesamte Bedienoberfläche 14 betrachtet gleich sein soll, so sollte das Bedienelement 12 beim haptischen Feedback ausschließlich eine translatorische Bewegung vollführen. Theoretisch gelingt dies in einfachster Weise dadurch, dass das Antriebselement 34 des Aktuators 32 im Massenschwerpunkt 40 des Bedienelements 12 angreift. Dies ist aber aufgrund der Bauraumgegebenheiten nicht möglich.

Will man nun dennoch erreichen, dass sich das Bedienelement 12 beim aktiven haptischen Feedback ausschließlich translatorisch bewegt, so besteht eine konstruktiv vergleichsweise einfache Lösung darin, den Aktuator 32 derart anzuordnen, dass der Massenschwerpunkt 40 des Bedienelements 12 auf der Wirkbewegungsachse 38 des Antriebselements 34 des Aktuators 32 liegt. Dies ist in Fig. 1 gezeigt, wobei in Fig. 1 auch dargestellt ist, wie sich das Bedienelement 12 aktiv bewegt, wenn eine Betätigungsbewegung erkannt und die Betätigung des Bedienelements 12 durch haptisches Feedback rückbestätigt wird. Hierbei ist noch zu bemerken, dass die zweiten Federelemente 24 bzw. deren Federwirkachsen 42 idealerweise in einer Ebene 44 liegen, in der sich auch der Massenschwerpunkt 40 befindet.

Im Wesentlichen orthogonal zu dieser Ebene 44 verläuft diejenige Ebene, die durch die Lateralbewegungsachse 20 des Bedienelements 12 und die Wirkbewegungsachse 38 des Antriebselements 34 des Aktuators 32 aufgespannt wird. Bei dieser Ebene handelt es sich bezogen auf Fig. 1 um die Zeichnungsebene.

Die rein translatorische Bewegung des Bedienelements 12 beim aktiven haptischen Feedback weist also sowohl eine Lateral- als auch eine Vertikalkomponente auf. Dass diese Feedbackbewegung nicht rein lateral ist, spielt dafür, dass das haptische Empfinden über die gesamte Bedienoberfläche 14 des Bedienelements 12 gleich sein soll, keine Rolle. Entscheidend ist, dass das Bedienelement 12 beim aktiven haptischen Feedback keinerlei rotatorische Bewegungsanteile erfährt, es also insoweit vorteilhafterweise ausschließlich zu einer Parallelverschiebung des Bedienelements 12 im Raum kommt.

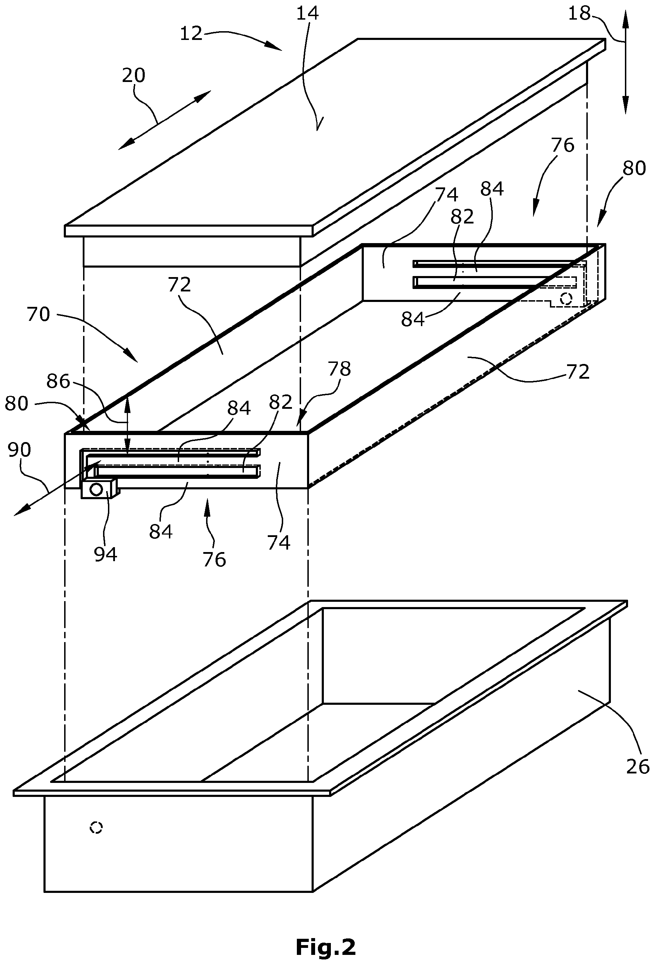

Nachfolgend soll auf die elastische Verbindung/Montage des Bedienelements 12 an dem Gehäuse 26 der Bedieneinheit 10 eingegangen werden. Dabei besteht die Besonderheit darin, dass die beiden in Fig. 1 schematisch dargestellten Federn 22,24 durch einen Federrahmen 70 realisiert werden. Der Federrahmen 70 ist in der Explosionsdarstellung gemäß Fig. 2 gezeigt.

Der Federrahmen 70 ist vorzugsweise aus Metall und insbesondere aus Aluminium gefertigt und weist eine im Wesentlichen rechteckige Form auf. Der Federrahmen 70 umfasst zwei Längsrahmenabschnitte 72 und zwei quer dazu verlaufende Querrahmenabschnitte 74 auf. Die Längsrahmenabschnitte 72 verlaufen parallel zur Lateralbewegungsachse 20 des Bedienelements 12, während die Querrahmenabschnitte 74 quer zur Lateralbewegungsachse 20 verlaufen. In den beiden Querrahmenabschnitten 74 des Federrahmens 70 sind Blattfederarme 76 ausgebildet, die ein erstes Ende 78, an denen sie mit dem Federrahmen 70 verbunden sind, und ein zweites freies Ende 80 aufweisen. Die beiden Blattfederarme 76 erstrecken sich in jeweiligen Vertikalebenen, die parallel zur Vertikalbewegungsachse 18 verlaufen. Die Blattfederarme 76 sind innerhalb der Querrahmenabschnitte 74 "freigeschnitten" und weisen überdies jeweils eine allseitig umlaufend geschlossene Aussparung 82 auf, so dass jeder Blattfederarm 76 zwei Blattfederstege 84 umfasst, die an den Enden 78,80 starr miteinander verbunden sind. Wie ferner anhand von Fig. 2 zu erkennen ist, sind die beiden Blattfederarme 76 zueinander gegensinnig ausgerichtet.

Wird nun das Bedienelement 12 betätigt, so wird es unter Verbiegung der Blattfederarme 76 in Richtung der Vertikalbewegungsachse 18 bewegt, und zwar gegen die von den Blattfederarmen 76 aufgebrachte Biegekraft in Richtung des Pfeils 86. In dieser Wirkrichtung (Force Sense) verhalten sich die Blattfederarme 76 vergleichsweise steif, was für das haptische Empfinden vorteilhaft ist.

Kommt es nun aufgrund der Betätigung des Bedienelements 12 zu der haptischen Rückmeldung, so wird das Bedienelement 12 in Richtung der Lateralbewegungsachse 20 mechanisch angeregt (Force Feedback), was dazu führt, dass nun die Blattfederarme 76 sich elastisch in Richtung des Pfeils 90 verbiegen. Hierbei führen die Blattfederarme 76 ebenfalls die Funktion eines Biegebalkens aus, wobei sie bei Bewegung in Richtung des Pfeils 90 weniger steif wirken können als in Richtung des Pfeils 86. Mit Vorteil werden also beide Elastizitätslagerungsfunktionen des Bedienelements 12 durch ein einziges Element, nämlich durch den Federrahmen 70, realisiert.

Letztendlich sind die Steifigkeiten des Systems in Richtung Force Sense und in Richtung Force Feedback abhängig von den Massen. Grundsätzlich muss die Force Feedback-Richtung nicht weniger steif sein. Die Force Sense-Steifigkeit ergibt sich aus dem Arbeitsbereich der Sensoren. So benötigt z.B. ein optischer Sensor einen gewissen Hub-Arbeitsbereich, um seine Funktion ausüben zu können. Die Force Feedback-Steifigkeit ist hauptsächlich in Abhängigkeit von der Masse und der Energie zur Ansteuerung zu sehen.

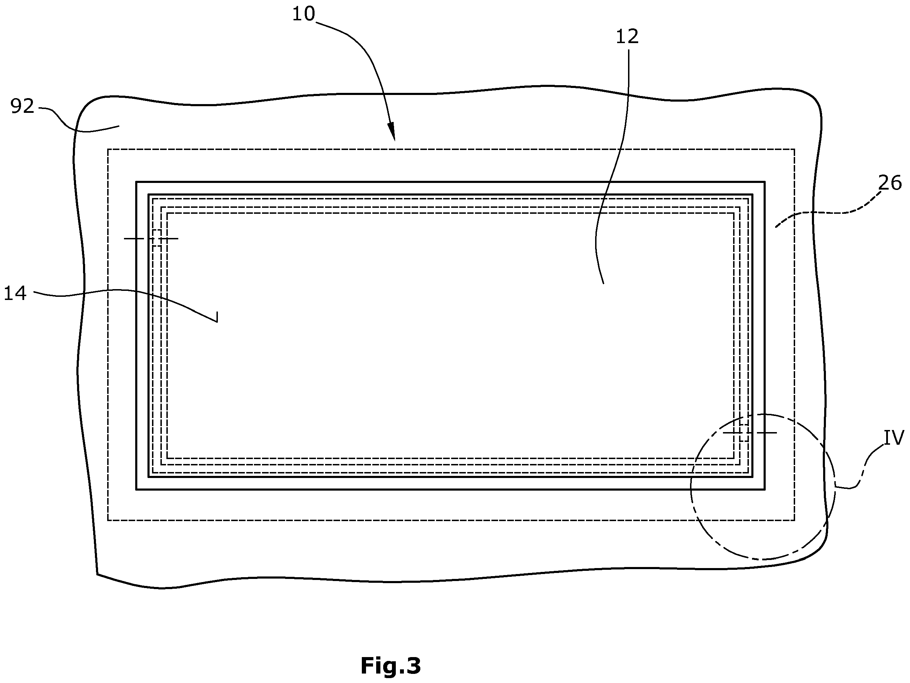

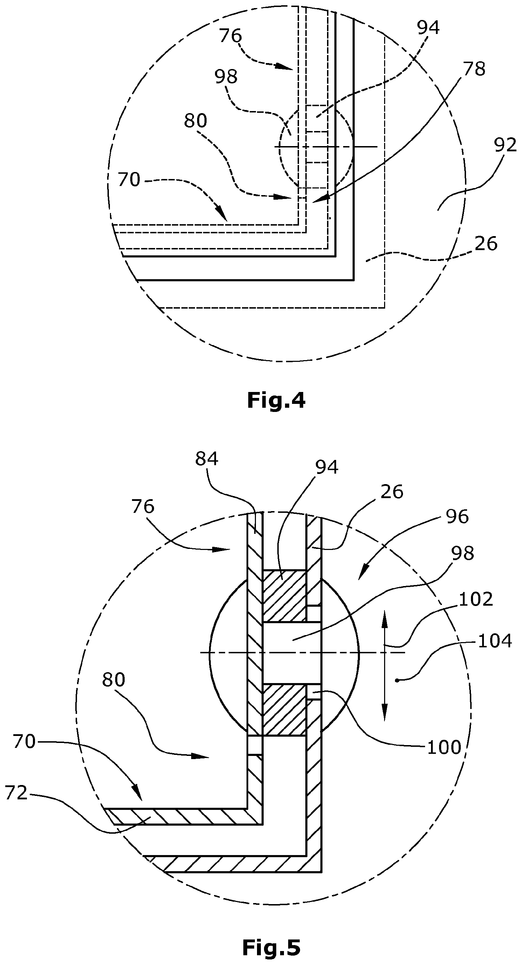

Fig. 3 zeigt in der Draufsicht auf die Bedieneinheit 10, dass das Bedienelement 12 einen allseitig im Wesentlichen gleichmäßigen Spaltabstand zum die Bedieneinheit 10 umgebenden Bereich beispielsweise einer Instrumententafel 92 aufweist. Fig. 4 zeigt einen Teil der Fig. 3 im vergrößerten Maßstab. Zu erkennen ist, dass der Federrahmen 70 an dem freien zweiten Ende 80 eines Blattfederarms 76 an der Innenseite des Gehäuses 26 befestigt ist, und zwar mit Abstand über einen Abstandsvorsprungs 94 am zweiten freien Ende 80. In Fig. 4 ist der Übersichtlichkeit wegen das Bedienelement 12 nicht gezeigt.

Die Verbindung der Blattfederarme 76 mit dem Gehäuse 26 ist in nochmals vergrößerter Darstellung in Fig. 5 gezeigt. Am zweiten freien Ende 80 eines Blattfederarms 76 befindet sich mindestens ein Befestigungselement 96 in Form eines Niets 98, der mit Spiel das Gehäuse 26 durchdringt. In dem Gehäuse 26 befindet sich eine Aufnahmeöffnung 100, durch die hindurch sich der Niet 98 erstreckt. Durch Verschieben des Federrahmens 70 und/oder des Gehäuses 26 relativ zueinander (siehe den Doppelpfeil 102 in Fig. 5), und zwar vor dem Festziehen des Niets 98, kann also nun das Spaltmaß an den Längsrahmenabschnitten 72 des Federrahmens 70 und damit an den entsprechenden Längsrandabschnitten des Bedienelements 12 eingestellt werden, so dass an beiden Längsseiten das Spaltmaß das gleiche ist. Durch Relativverschieben der beiden zuvor genannten Elemente senkrecht zur Zeichenebene gemäß Fig. 5 (siehe die als Punkt angedeutete Bewegungsrichtung 104) kann die Montagehöhe des Bedienelements 12 eingestellt werden, so dass dessen Bedienoberfläche 14 mit dem angrenzenden Oberflächenbereich der Instrumententafel 92 fluchtet (siehe auch Fig. 1). Eine Vergleichmäßigung der Spaltmaße an den Querrändern des Bedienelements 12 erfolgt automatisch, indem sich der am Gehäuse 26 befestigte Federrahmen 70 in Richtung der Lateralbewegungsachse 20 selbsttätig zentriert.

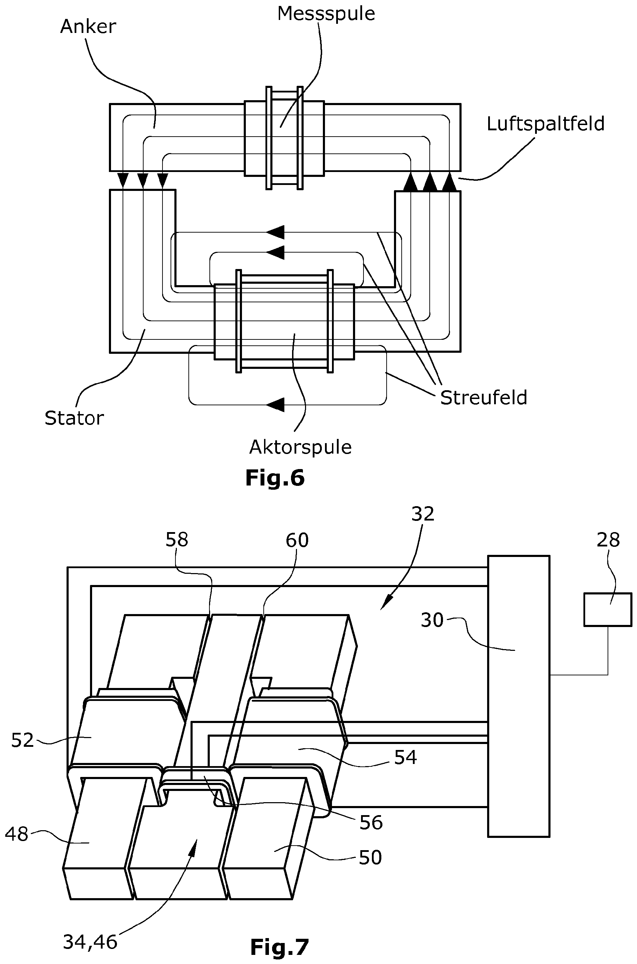

Wie bereits weiter oben beschrieben, setzt man aus insbesondere Bauraum-und Kostengründen für das haptische Feedback von Bedienelementen oftmals als Aktuator einen Elektromagneten ein. Die von diesem Elektromagneten aufgebrachte Kraft kann nur mit erhöhtem Aufwand abgeschätzt werden und hängt ganz wesentlich vom Strom und Luftspalt des Elektromagneten ab. Die insoweit geltenden Gegebenheiten bei einem Elektromagneten sollen nachfolgend anhand von Fig. 6 verdeutlicht werden.

In Fig. 6 ist ein Elektromagnet dargestellt, dessen Stator und Anker aus hochpermeablen Materialien (üblicherweise Automatenstahl oder Elektroblech) besteht, und dessen Magnetfeld mittels einer bestromten Erregerspule aufgebaut wird.

Die Kraft eines solchen Elektromagneten wird üblicherweise aus dem Erregerstrom und der Luftspaltgröße berechnet. Der Kraftverlauf im Falle des haptischen Feedbacks ist jedoch sehr dynamisch mit Frequenzanteilen oberhalb von 1 kHz. Hierbei ist der Zusammenhang zwischen Strom und Kraft bei üblich verwendeten Automatenstählen oder Elektroblechen zur Magnetflussführung nicht trivial und nur durch eine sehr aufwendige Modellierung beschreibbar. Dazu kommt noch, dass der Luftspalt wegen der mechanischen Toleranzen und der Bewegung der Bedienoberfläche nicht genau bekannt ist, und somit die Kraftwirkung des Aktuators nur grob abschätzbar ist. Unter Verwendung der "Maxwellschen Zugkraftformel" und einer Messspule zur Ermittlung der magnetischen Flussdichte im Luftspalt kann dieses Problem umgangen werden, wobei eine Spannungsmessung in aller Regel kostengünstiger gestaltet werden kann als eine Strommessung:

$$F = \frac{B_L^2 A_L}{2\mu_0}$$

($F$ - Aktuatorkraft, $\mu_0$ - Permeabilität der Luft, $A_L$ - Luftspaltfläche, $B_L$ - Magnetflussdichte im Luftspalt)

Die relativ geringe Inhomogenität der Luftspaltflussdichte in praktischen Ausführungen kann durch einen Korrekturfaktor berücksichtigt werden, was wiederum zu einer einfachen Realisierung einer Kraftmessung mittels einer Messspule führt:

$$F(t) = \frac{C}{2\mu_0 A_L} \left( \frac{1}{N_{MS}} \int_0^t u(t')dt' \right)^2$$

($t$ - Zeit, $C$ - Luftspaltkorrekturfaktor, $N_{MS}$ - Windungszahl der Messpule, $u(t)$ - induzierte Spannung in der Messspule)

Die Integration der induzierten Spannung kann digital mit einem in der Regel im System schon vorhandenen Mikrocontroller ausgeführt werden. Somit ist die Kraft zu jedem Zeitpunkt der Ansteuerung bekannt.

Fig. 7 zeigt den Aktuator 32 in perspektivischer Ansicht. Dieser Aktuator 32 ist als Doppelelektromagnet ausgebildet, dessen Antriebselement 34 als Anker 46, der zwischen einem ersten Stator 48 und einem zweiten Stator 50 angeordnet ist, in zwei entgegengesetzten Richtungen längs der Wirkbewegungsachse 38 Kraft aufbauen kann.

Der erste und der zweite Stator 48,50 sind am Gehäuse 26 befestigt, während der Anker 46 mit dem Bedienelement 12 fest verbunden ist. Der erste Stator 48 weist eine erste Erregerspule 52 auf, während der zweite Stator 50 mit einer zweiten Erregerspule 54 versehen ist. Der Anker 46 ist von einer Messspule 56 umgeben. Beidseitig des Ankers 46 befindet sich jeweils ein erster bzw. ein zweiter Luftspalt 58,60. Da die auf den Anker 46 wirkende Kraft jeweils in eine Richtung gerichtet sein soll, werden die Erregerspulen 52,54 entsprechend nicht gleichzeitig, sondern abwechselnd bestromt. Mit dem Aufbau der Messspule 56 am Anker 46 wird eine genaue und kostengünstige Kraftmessung in beiden Wirkrichtungen längs der Wirkbewegungsachse 38 ermöglicht.

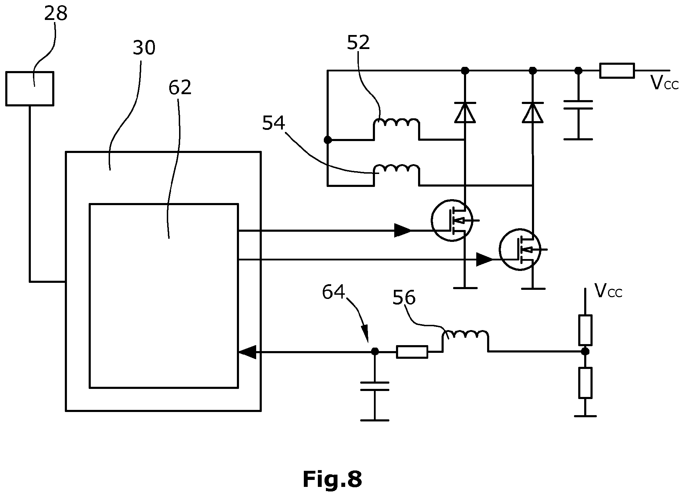

Die Ansteuerung und die Auswertung der in der Messspule 56 induzierten Spannung können beispielhaft mittels eines Mikrocontrollers 62 erfolgen, der Teil der Auswerte- und Ansteuereinheit 30 sein kann. Ein Beispiel für eine Beschaltung mit dem Mikrocontroller 62 ist in Fig. 8 gezeigt. Die induzierte Spannung in der Messspule 56 wird zunächst durch einen einfachen Tiefpass 64 geglättet, um die PWM-Taktung (Frequenz in der Regel > 20 kHz) zur wechselweisen Ansteuerung der beiden Erregerspulen 52,54 aus dem Messsignal zu eliminieren. Danach erfasst der Mikrocontroller 62 die induzierte Spannung und integriert sie digital. Die Grenzfrequenz des Tiefpasses 64 sollte ausreichend höher als die höchsten Frequenzanteile des Kraftverlaufs liegen.

## BEZUGSZEICHENLISTE

| | |
|---|---|
| 10 | Bedieneinheit |
| 12 | Bedienelement |
| 14 | Bedienoberfläche des Bedienelements |
| 16 | Symbolfelder |
| 18 | Vertikalbewegungsachse des Bedienelements |
| 20 | Lateralbewegungsachse des Bedienelements |
| 22 | Federelemente |
| 24 | Federelemente |
| 26 | Gehäuse |
| 28 | Sensor |
| 30 | Ansteuereinheit |
| 32 | Aktuator |
| 34 | Antriebselement des Aktuators |
| 36 | Statorteil des Aktuators |
| 38 | Wirkbewegungsachse des Aktuators |
| 40 | Massenschwerpunkt des Bedienelements |
| 42 | Federwirkachse |
| 44 | Ebene |
| 46 | Anker |
| 48 | Stator |
| 50 | Stator |
| 52 | Erregerspule |
| 54 | Erregerspule |

| | |
|---|---|
| 56 | Messspule |
| 58 | Luftspalt |
| 60 | Luftspalt |
| 62 | Mikrocontroller |
| 64 | Tiefpass |
| 70 | Federrahmen |
| 72 | Längsrahmenabschnitte des Federrahmens |
| 74 | Querrahmenabschnitte des Federrahmens |
| 76 | Blattfederarme |
| 78 | erstes Ende eines Blattfederarms |
| 80 | zweites Ende eines Blattfederarms |
| 82 | Aussparung |
| 84 | Blattfederstege eines Blattfederarms |
| 86 | Bewegungspfeil |
| 90 | Bewegungspfeil |
| 92 | Instrumententafel |
| 94 | Abstandsvorsprungs |
| 96 | Befestigungselement |
| 98 | Niet |
| 100 | Aufnahmeöffnung |
| 102 | lateraler Toleranzausgleich |
| 104 | vertikaler Toleranzausgleich |

**Patentansprüche**

1. Bedieneinheit für ein Fahrzeug, insbesondere Infotainment-System zur Steuerung diverser Fahrzeugkomponenten, mit

- einem Gehäuse (26) mit einer Vorderseite,
- einem an der Vorderseite des Gehäuses (26) angeordneten Bedienelement (12), das eine Bedienoberfläche (14) aufweist,
- wobei das Bedienelement (12) an und/oder in dem Gehäuse (26) längs einer zur Bedienoberfläche (14) im Wesentlichen orthogonal verlaufenden Vertikalbewegungsachse (18) und längs einer im Wesentlichen quer zu dieser verlaufenden Lateralbewegungsachse (20) federelastisch gelagert ist,
- mindestens einem Sensor (28) zur Erfassung einer Betätigungsbewegung des Bedienelements (12) in Richtung der Vertikalbewegungsachse (18),
- einem in und/oder an dem Gehäuse (26) angeordneten Aktuator (32) zur Rückmeldebewegung des Bedienelements (12) zumindest auch in der Lateralbewegungsachse (20) bei einer erkannten Betätigungsbewegung des Bedienelements (12), wobei der Aktuator (32) ein elektromagnetisch ansteuerbares, mit dem Bedienelement (12) mechanisch gekoppeltes Antriebselement (34) aufweist, das vor- und/oder zurückbewegbar ist, und
- einer Auswerte- und Ansteuereinheit (30), die mit dem Sensor (28) und dem Aktuator (32) verbunden ist,

**gekennzeichnet durch**

- einen Federrahmen (70) zur federelastischen Lagerung des Bedienelements (12),
- wobei der Federrahmen (70) zwei quer zur Lateralbewegungsachse (20) verlaufende Querrahmenabschnitte (74) aufweist, in denen jeweils mindestens ein Blattfederarm (76) ausgebildet ist,
- wobei jeder Blattfederarm (76) ein mit dem Federrahmen (70) verbundenes erstes Ende (78) und ein freies zweites Ende (80) aufweist,
- wobei sich jeder Blattfederarm (76) in einer Vertikalebene erstreckt und die Lateralbewegungsachse (20) quer zu dieser Vertikalebene verläuft,
- wobei jeder Blattfederarm (76) auch in der Vertikalebene federelastisch ist und
- wobei das Bedienelement (12) außerhalb der Blattfederarme (76) des Federrahmens (70) an diesem fixiert ist und die freien zweiten Enden (80) der Blattfederarme (76) des Federrahmens (70) an dem Gehäuse (26) befestigt sind.

2. Bedieneinheit nach Anspruch 1, **dadurch gekennzeichnet, dass** jeder Blattfederarm (76) zur Bildung von mindestens zwei Blattfederstegen (84) mindestens eine umlaufend geschlossene Aussparung (82) aufweist.

3. Bedieneinheit nach einem der Ansprüche 1 oder 2, **dadurch gekennzeichnet, dass** der Federrahmen (70) rechteckig ist und zwei parallel zur Lateralbewegungsachse (20) des Bedienelements (12) verlaufende Längsrahmenabschnitte (72) sowie zwei quer zur Lateralbewegungsachse (20) verlaufende Querrahmenabschnitte (74) aufweist, an und/oder in denen jeweils mindestens ein Blattfederarm (76) ausgebildet ist.

4. Bedieneinheit nach einem der Ansprüche 1 bis 3, **dadurch gekennzeichnet, dass** die beiden Blattfederarme (76) zueinander gleich oder zueinander gegensinnig ausgerichtet sind.

5. Bedieneinheit nach einem der Ansprüche 1 bis 4, **dadurch gekennzeichnet, dass** das freie Ende (80) jedes Blattfederarms (76) und/oder das Gehäuse (12) mindestens eine Aufnahmeöffnung (100) für ein sich durch die Aufnahmeöffnung (100) erstreckendes Befestigungselement (96) zur Befestigung des betreffenden Blattfederarms (76) an dem Gehäuse (26) aufweist, wobei sich das Befestigungselement (96) zwecks Ausgleich von Montagetoleranzen mit Spiel durch die Aufnahmeöffnung (100) erstreckt.

6. Bedieneinheit nach einem der Ansprüche 1 bis 5, **dadurch gekennzeichnet, dass** das Bedienelement (12) einen Massenschwerpunkt (40) aufweist, dass das Antriebselement (34) des Aktuators (32) längs einer Wirkbewegungsachse (38) vor- und zurückbewegbar ist und dass der Massenschwerpunkt (40) des Bedienelements (12) auf oder im Wesentlichen auf der Wirkbewegungsachse (38) des Antriebselements (34) des Aktuators (32) liegt.

7. Bedieneinheit nach Anspruch 6, **dadurch gekennzeichnet, dass** die Lateralbewegungsachse (20) des Bedienelements (12) und die Wirkbewegungsachse (38) des Antriebselements (34) des Aktuators (32) eine gemeinsame, im Wesentlichen orthogonal zur Bedienoberfläche (14) stehende Vertikalebene aufspannen.

8. Bedieneinheit nach Anspruch 7, **dadurch gekennzeichnet, dass** das Gehäuse (26) unterhalb des Bedienelements (12) einen Bauraum aufweist und dass der Aktuator (32) zur Erzielung eines kleinstmöglichen Winkels zwischen der Wirkbewegungsachse (38) des Antriebselements (34) des Aktuators (32) und der Lateralbewegungsachse (20) des Bedienelements (12) so nah wie bauraumbedingt möglich unterhalb des Bedienelements (12) und/oder soweit wie bauraumbedingt möglichst weit von dem Massenschwerpunkt (40) des Bedienelements (12) entfernt angeordnet ist.

9. Bedieneinheit nach einem der Ansprüche 6 bis 8, **dadurch gekennzeichnet, dass** die Blattfederarme (76) des Federrahmens (70) zur Realisierung der Lateralbewegung Federwirkachsen (42) aufweisen, die auf der Lateralbewegungsachse (20) liegen oder die in einer Ebene (44), die im Wesentlichen orthogonal zur von der Wirkbewegungsachse (38) des Antriebselements (34) des Aktuators (32) und der Lateralbewegungsachse (20) des Bedienelements (12) aufgespannten Ebene ist, liegen sowie symmetrisch zur Lateralbewegungsachse (20) angeordnet sind.

10. Bedieneinheit nach einem der Ansprüche 6 bis 9, **dadurch gekennzeichnet, dass** der Aktuator (32) als Zuganker-Elektromagnet mit einem ersten Stator (48), der eine erste Erregerspule (52) aufweist, und einem Anker (46) als Antriebselement (34) ausgebildet ist, dass der Anker (46) mit einer Messspule (56) versehen ist, an der eine Messspannung anliegt, wenn der Anker (46) von einem durch die erste Erregerspule (52) erzeugten Magnetfluss durchdrungen ist, und dass die erste Erregerspule (52) und die Messspule (56) mit der Auswerte- und Ansteuereinheit (30) verbunden sind, wobei mittels der Auswerte- und Ansteuereinheit (30) die Kraft steuerbar und/oder regelbar ist, mit der der Anker (46) in Richtung auf den ersten Stator (48) zu bewegbar ist und/oder die Auslenkbewegung des Ankers (46) aus dessen Ruheposition sowie die Zurückbewegung des Ankers (46) in dessen Ruheposition steuerbar und/oder regelbar ist, wobei insbesondere vorgesehen sein kann, dass der Zuganker-Elektromagnet einen zweiten Stator (50) mit einer zweiten Erregerspule (54) aufweist, wobei die beiden Statoren (48, 50) beidseitig des Ankers (46) angeordnet sind und auch die zweite Erregerspule (54) mit der Auswerte- und Ansteuereinheit (30) verbunden ist, wobei mittels der Auswerte- und Ansteuereinheit (30) die jeweilige Kraft steuerbar und/oder regelbar ist, mit der der Anker (46) in die jeweilige Richtung auf den ersten bzw. zweiten Stator (48, 50) zu bewegbar ist, und/oder die Auslenkbewegung des Ankers (46) aus dessen Ruheposition sowie die Zurückbewegung des Ankers (46) in dessen Ruheposition steuerbar ist.

**Claims**

1. An operating unit for a vehicle, particularly an infotainment system for controlling diverse vehicle components, comprising

   - a housing (26) having a front side,
   - an operating element (12) arranged on the front side of the housing (26), which has an operating surface (14),
   - wherein the operating element (12) is mounted in a spring-elastic manner on and/or in the housing (26) along a vertical axis of movement (18) extending substantially orthogonally to the operating surface (14) and along a lateral axis of movement (20) extending substantially transversely to the vertical axis of movement,
   - at least one sensor (28) for detecting an actuating movement of the operating element (12) in the direction of the vertical axis of movement (18),
   - an actuator (32) arranged in and/or on the housing (26) for feedback movement of the operating element (12) at least also in the lateral axis of movement (20) upon a detected actuating movement of the operating element (12), wherein the actuator (32) comprises an electromagnetically controllable drive element (34) mechanically coupled to the operating element (12) and being movable forth and/or back,
   - an evaluating and control unit (30) connected to the sensor (28) and the actuator (32),

   **characterized by**

   - a spring frame (70) for spring-elastic support of the operating element (12),
   - wherein the spring frame (70) comprises two transverse frame sections (74) extending transversely to the lateral axis of movement (20) and each having at least one leaf spring arm (76) arranged in it,
- wherein each leaf spring arm (76) comprises a first end (78) connected to the spring frame (70) and a free second end (80),
- wherein each leaf spring arm (76) extends in a vertical plane and the lateral axis of movement (20) extends transversely to said vertical plane,
- wherein each leaf spring arm (76) is also spring-elastic in the vertical plane, and
- wherein the operating element (12) is fixed to the spring frame (70) outside the leaf spring arms (76) of the spring frame (70), and the free second ends (80) of the leaf spring arms (76) of the spring frame (70) are fixed to the housing (26).

2. The operating unit according to claim 1, **characterized in that** each leaf spring arm (76) comprises at least one cutout (82), closed on all sides, for forming at least two leaf spring webs (84).

3. The operating unit according to claim 1 or 2, **characterized in that** the spring frame (70) is rectangular and comprises two longitudinal frame sections (72) extending parallel to the lateral axis of movement (20) of the operating element (12), and two transverse frame sections (74) extending transversely to the lateral axis of movement (20) and each having at least one leaf spring arm (76) formed on and/or in them.

4. The operating unit according to any one of claims 1 to 3, **characterized in that** the two leaf spring arms (76) are oriented in a mutually identical configuration or in opposite senses to each other.

5. The operating unit according to any one of claims 1 to 4, **characterized in that** the free end (80) of each leaf spring arm (76) and/or the housing (12) comprises at least one receiving opening (100) for a fastening element (96), extending through the receiving opening (100), for fastening the respective leaf spring arm (76) to the housing (26), wherein, for compensation of mounting tolerances, the fastening element (96) extends through the receiving opening (100) with play.

6. The operating unit according to any one of claims 1 to 5, **characterized in that** the operating element (12) has a center of mass (40), that the drive element (34) of the actuator (32) is movable back and forth along an axis of effective movement (38), and that the center of mass (40) of the operating element (12) is situated on, or substantially on, the axis of effective movement (38) of the drive element (34) of the actuator (32).

7. The operating unit according to claim 6, **characterized in that** the lateral axis of movement (20) of the operating element (12) and the effective axis of movement (38) of the drive element (34) of the actuator (32) are arranged to span a common vertical plane oriented substantially orthogonally to the operating surface (14).

8. The operating unit according to claim 7, **characterized in that**, below the operating element (12), the housing (26) comprises an installation space and that the actuator (32), for obtaining a smallest possible angle between the effective axis of movement (38) of the drive element (34) of the actuator (32) and the lateral axis of movement (20) of the operating element (12), is arranged below the operating element (12) as closely as allowable by the installation space, and/or is arranged as remote from the center of mass (40) of the operating element (12) as allowable by the installation space.

9. The operating unit according to any one of claims 6 to 8, **characterized in that**, for realizing the lateral movement, the leaf spring arms (76) of the spring frame (70) have spring effective axes (42) that are situated on the lateral axis of movement (20) or in a plane (44) extending substantially orthogonally to the plane spanned by the axis of effective movement (38) of the drive element (34) of the actuator (32) and by the lateral axis of movement (20) of the operating element (12) and are arranged symmetrically to the lateral axis of movement (20).

10. The operating unit according to any one of claims 6 to 9, **characterized in that** the actuator (32), as a tie-rod solenoid, comprises a first stator (48) having a first exciter coil (52), and comprises an armature (46) as a drive element (34), that the armature (46) is provided with a measuring coil (56) having a measuring voltage applied to it when the armature (46) is passed through by a magnetic flow generated by the first exciter coil (52), and that the first exciter coil (52) and the measuring coil (56) are connected to the evaluating and control unit (30), wherein, by means of the evaluating and control unit (30), there can be controlled or feedback-controlled the force by which the armature (46) is movable in the direction toward the first stator (48), and/or the deflection movement of the armature (46) from its rest position as well as the return movement of the armature (46) into its rest position, wherein it can be particularly provided that the tie-rod solenoid comprises a second stator (50) having a second exciter coil (54), wherein the two stators (48, 50) are arranged on both sides of the armature (46) and also the second exciter coil (54) is connected to the evaluating and control unit (30), wherein the evaluating and control unit (30) is adapted to control, or to feedback-control, the respective force by which the armature (46) is movable in the respective direction toward the first stator and respectively the second stator (48, 50), and/or the deflection movement of the armature (46) from its rest position as well as the return movement of the armature (46) into its rest position.

**Revendications**

1. Unité de commande pour un véhicule, en particulier système d'info-divertissement, pour la commande de divers composants du véhicule, comprenant

   - un boîtier (26) doté d'une face avant,
   - un élément de commande (12) agencé sur la face avant du boîtier (26), laquelle comporte une surface de commande (14),
   - dans laquelle l'élément de commande (12) est disposé de manière élastique sur et/ou dans le boîtier (26) le long d'un axe de mouvement vertical (18) sensiblement orthogonal à la surface de commande (14) et le long d'un axe de mouvement latéral (20) sensiblement transversal à celle-ci,
   - au moins un capteur (28) pour saisir un mouvement d'actionnement de l'élément de commande (12) dans la direction de l'axe de mouvement vertical (18),
   - un actionneur (32) agencé dans et/ou sur le boîtier (26) pour un mouvement de rétroaction de l'élément de commande (12) au moins également dans l'axe de mouvement latéral (20) lors d'un mouvement d'actionnement de l'élément de commande (12), dans laquelle l'actionneur (32) comporte un élément d'entraînement (34) électromagnétiquement pilotable et couplé mécaniquement à l'élément de commande (12), lequel peut être avancé et/ou reculé, et
   - d'une unité de contrôle et de pilotage (30), laquelle est raccordée au capteur (28) et à l'actionneur (32),

   **caractérisée par**

   - un cadre élastique (70) pour disposer l'élément de commande(12) de manière élastique,
   - dans laquelle le cadre élastique (70) comporte deux sections transversales de cadre (74) transversales à l'axe de mouvement latéral (20), au moins un bras de ressort à lames (76) étant respectivement réalisé dans celles-ci,
   - dans laquelle chaque bras de ressort à lames (76) comporte une première extrémité (78) reliée au cadre élastique (70) et une deuxième extrémité libre (80),
   - dans laquelle chaque bras de ressort à lames (76) s'étend dans un plan vertical et l'axe de mouvement latéral (20) est transversale à ce plan vertical,
   - dans laquelle chaque bras de ressort à lames (76) est également élastique dans le plan vertical et
   - dans laquelle l'élément de commande (12) est bloqué sur celui-ci à l'extérieur des bras de ressort à lames (76) du cadre élastique (70) et les deuxièmes extrémités libres (80) des bras de ressort à lames (76) du cadre élastique (70) sont fixées sur le boîtier (26).

2. Unité de commande selon la revendication 1, **caractérisé en ce que** chaque bras de ressort à lames (76) comporte au moins un évidement (82) fermé périphériquement pour former au moins deux traverses de ressort à lames (84).

3. Unité de commande selon l'une des revendications 1 ou 2, **caractérisée en ce que** le cadre élastique (70) est rectangulaire et comporte deux sections longitudinales de cadre (72) parallèles à l'axe de mouvement latéral (20) de l'élément de commande (12) ainsi que deux sections transversales de cadre (74) transversales à l'axe de mouvement latéral (20) de l'élément de commande (12), au moins un bras de ressort à lames (76) étant respectivement réalisé dans et/ou sur celles-ci.

4. Unité de commande selon l'une des revendications 1 à 3, **caractérisée en ce que** les deux bras de ressort à lames (76) sont orientés dans le même sens ou en sens opposé l'un par rapport à l'autre.

5. Unité de commande selon l'une des revendications 1 à 4, **caractérisée en ce que** l'extrémité libre (80) de chaque bras de ressort à lames (76) et/ou le boîtier (12) comporte au moins une ouverture de réception (100) pour un élément de fixation (96) s'étendant au travers de l'ouverture de réception (100) pour la fixation du bras de ressort à lames (76) concerné au boîtier (26), dans laquelle l'élément de fixation (96) s'étend au travers de l'ouverture de réception (100) avec du jeu dans le but de compenser les tolérances de montage.

6. Unité de commande selon l'une des revendications 1 à 5, **caractérisée en ce que** l'élément de commande (12) comporte un centre de gravité (40), **en ce que** l'élément d'entraînement (34) de l'actionneur (32) peut être avancé et reculé le long d'un axe de mouvement opérant (38) et **en ce que** le centre de gravité (40) de l'élément de commande (12) se trouve sur ou sensiblement sur l'axe de mouvement opérant (38) de l'élément d'entraînement (34) de l'actionneur (32).

7. Unité de commande selon la revendication 6, **carac-**

**térisée en ce que** l'axe de mouvement latéral (20) de l'élément de commande (12) et l'axe de mouvement opérant (38) de l'élément d'entraînement (34) de l'actionneur (32) décrivent un plan vertical commun, sensiblement orthogonal à la surface de commande (14).

**8.** Unité de commande selon la revendication 7, **caractérisée en ce que** le boîtier (26) comporte en dessous de l'élément de commande (12) un espace d'installation et **en ce que** l'actionneur (32) est agencé pour obtenir un angle aussi faible que possible entre l'axe de mouvement opérant (38) de l'élément d'entraînement (34) de l'actionneur (32) et l'axe de mouvement latéral (20) de l'élément de commande (12), aussi près que possible avec l'espace d'installation en dessous de l'élément de commande (12) et/ou aussi éloigné que possible avec l'espace d'installation du centre de gravité (40) de l'élément de commande (12).

**9.** Unité de commande selon l'une des revendications 6 à 8, **caractérisée en ce que** les bras de ressort à lames (76) du cadre élastique (70) comportent des axes à effet de ressort (42) pour réaliser le mouvement latéral, lesquels se trouvent sur les axes de mouvement latéral (20) ou se trouvent dans un plan (44) sensiblement orthogonal au plan décrit par l'axe de mouvement latéral (20) de l'élément de commande (12) et l'axe de mouvement opérant (38) de l'élément d'entraînement (34) de l'actionneur (32) et sont également agencés de manière symétrique par rapport à l'axe de mouvement latéral (20).

**10.** Unité de commande selon l'une des revendications 6 à 9, **caractérisée en ce que** l'actionneur (32) est conçu comme électro-aimant à armature de traction comprenant un premier stator (48), lequel comporte une première bobine excitatrice (52), et une armature (46) comme élément d'entraînement (34), **en ce que** l'armature (46) est prévue avec une bobine de mesure (56), aux bornes de laquelle existe une tension de mesure lorsque l'armature (46) est parcourue par un flux magnétique produit par la première bobine excitatrice (52), et **en ce que** la première bobine excitatrice (52) et la bobine de mesure (56) sont reliées à l'unité de contrôle et de pilotage (30), dans laquelle, au moyen de l'unité de contrôle et de pilotage (30), la force avec laquelle l'armature (46) est mobile dans la direction du premier stator (48) est pilotable et/ou réglable, et/ou le mouvement de déviation de l'armature (46) hors de sa position de repos ainsi que le mouvement de retour de l'armature (46) dans sa position de repos est pilotable et/ou réglable, dans laquelle il peut être prévu en particulier que l'électro-aimant à armature de traction comporte un deuxième stator (50) comprenant une deuxième bobine excitatrice (54), dans laquelle les deux stators (48, 50) sont agencés des deux côtés de l'armature (46) et la deuxième bobine excitatrice (54) est également reliée à l'unité de contrôle et de pilotage (30), dans laquelle, au moyen de l'unité de contrôle et de pilotage (30), la force respective avec laquelle l'armature (46) est mobile dans la direction respective du premier ou du deuxième stator (48, 50) est pilotable et/ou réglable, et/ou le mouvement de déviation de l'armature (46) hors de sa position de repos ainsi que le mouvement de retour de l'armature (46) dans sa position de repos est pilotable.

**Fig.1**

EP 3 408 126 B1

**Fig.2**

Fig.3

**Fig.4**

**Fig.5**

Anker     Messspule

Luftspaltfeld

Streufeld

Stator

Aktorspule

**Fig.6**

58    60        32

28

30

52

54

48

56

50

34,46

**Fig.7**

**Fig.8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009007243 A
- DE 102012221107 B
- DE 102013006414 A
- EP 3043240 A
- DE 102015200037 A